(19) Europäisches Patentamt / European Patent Office / Office européen des brevets

(11) **EP 1 868 178 A2**

(12) **EUROPEAN PATENT APPLICATION**

(43) Date of publication:
**19.12.2007 Bulletin 2007/51**

(51) Int Cl.:
***G09G 3/34*** *(2006.01)*

(21) Application number: **07108617.7**

(22) Date of filing: **22.05.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | (72) Inventor: **Jun, Sung-gon**<br>**Gyeonggi-do (KR)** |
| (30) Priority: **12.06.2006 KR 20060052423** | (74) Representative: **D'Halleweyn, Nele Veerle Trees Gertrudis et al**<br>**Arnold & Siedsma**<br>**Sweelinckplein 1**<br>**2517 GK Den Haag (NL)** |
| (71) Applicant: **Samsung Electronics Co., Ltd.**<br>**Suwon-si, Gyeonggi-Do (KR)** | |

(54) **Display apparatus and control method thereof**

(57)    A display apparatus including a signal input unit, to which a video signal and a synchronization signal are input; a storage unit, in which a luminance conversion table corresponding to a plurality of display regions on the display unit is stored; a signal processor for processing the video signal so as to be displayed on the display unit; and a controller for controlling the signal processor, which converts the video signal so that a luminance level of the video signal is applied based on the luminance conversion table.

FIG. 6

```
                    ┌─────────┐
                    │  START  │
                    └─────────┘
                         │
        ┌────────────────────────────────┐
  S11 ──│ STORE LUMINANCE CONVERSION     │
        │ TABLES CORRESPONDING TO A      │
        │ PLURALITY OF DISPLAY REGIONS   │
        └────────────────────────────────┘
                         │
                    ╱─────────╲
  S13 ──          ╱  ARE A VIDEO ╲         NO
                 ╱ SIGNAL AND A    ╲──────────
                 ╲ SYNCHRONIZING   ╱
                  ╲ SIGNAL INPUT? ╱
                    ╲─────────╱
                       │ YES
        ┌────────────────────────────────┐
  S15 ──│ DETERMINE THE DISPLAY REGION   │
        │ IN WHICH THE VIDEO SIGNAL IS   │
        │ DISPLAYED BASED ON THE         │
        │ SYNCHRONIZING SIGANL           │
        └────────────────────────────────┘
                         │
        ┌────────────────────────────────┐
  S17 ──│ CONFIRM THE LUMINANCE          │
        │ CONVERSION TABLE CORRESPONDING │
        │ TO THE DETERMINED DISPLAY      │
        │ REGION                         │
        └────────────────────────────────┘
                         │
        ┌────────────────────────────────┐
  S19 ──│ CONVERT THE VIDEO SIGNAL BASED │
        │ ON THE CONFIRMED LUMINANCE     │
        │ CONVERSION TABLE               │
        └────────────────────────────────┘
                         │
                    ┌─────────┐
                    │   END   │
                    └─────────┘
```

EP 1 868 178 A2

**Description**

BACKGROUND OF THE INVENTION

Field of the Invention

Apparatuses and methods consistent with the present invention relate to a display and a control method thereof, and more particularly, to a display which displays an input video signal with a uniform level of luminance, and a control method thereof.

Description of the Related Art

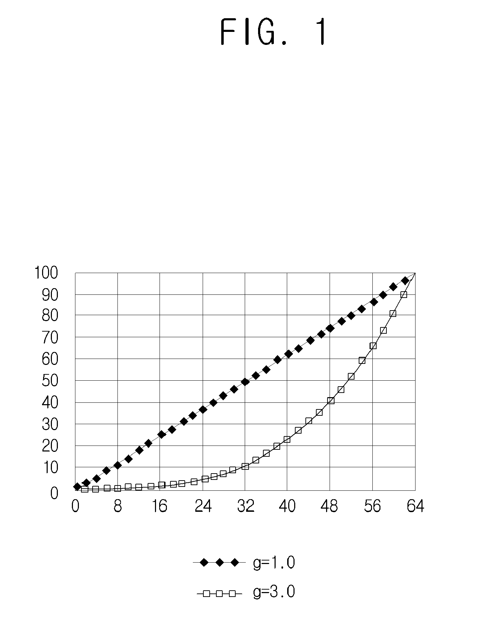

In general, a display apparatus converts video signals input thereto so that luminance levels of the video signals can be appropriately applied on a screen. A representative conversion method is a gamma conversion method using a gamma characteristic curve, which is a function of a luminance level, and which is applied according to a gray scale level of a video signal, as shown in FIG. 1.

When a gamma "g" is 1.0, a rate of change in a gray scale level and a rate of change in a luminance level are mutually proportional. Therefore, if the rate of change in the gray scale level of video signals is increased, the rate of change in the luminance level applied on screen is increased in correspondence to the enhanced gray scale level. Further, when a gamma "g" is 3.0, the rate of change in the luminance level is low (i.e., with a gentle slope) at the low gray scale level, while the rate of change in the luminance level is high (i.e., with a steep slope) at the high gray scale level.

That is, as a gamma "g" is enlarged, a portion of a video signal whose gray scale level is low is gamma-converted so that the rate of change in the luminance level according to change in the gray scale level becomes low, and a portion of a video signal whose gray scale level is high is gamma-converted so that the rate of change in the luminance level according to change of the gray scale level becomes large. Accordingly, the dark portion gets darker and the bright portion gets brighter. As a result, the dark portion and the bright portion can be expressed by contrast to each other.

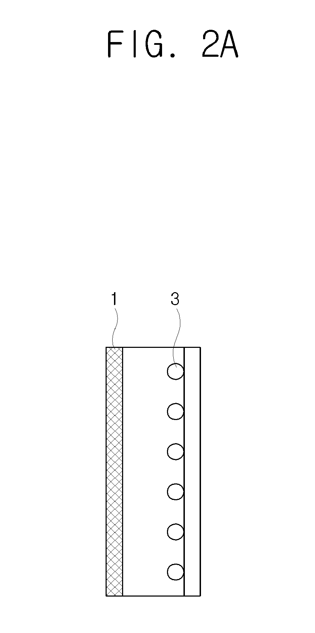

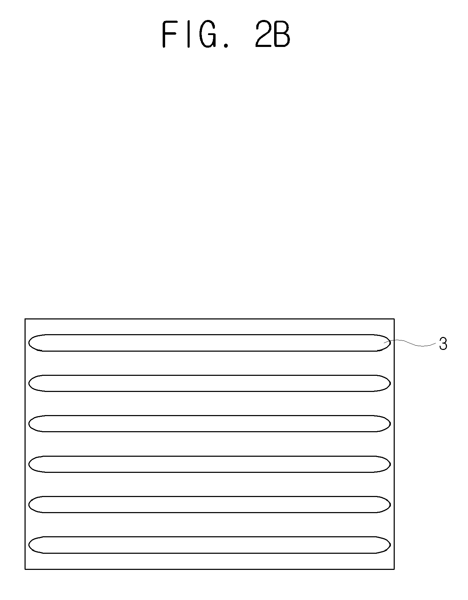

FIG. 2A is a side view showing a structure of a backlight of a conventional liquid crystal display (LCD) apparatus. FIG. 2B is a front view showing a structure of a backlight of a conventional LCD apparatus.

Referring to FIGS. 2A and 2B, an LCD apparatus with an LCD has a backlight 3 illuminating a display unit 1 on which video signals are displayed.

Here, an alternating-current (AC) power is applied to the backlight 3. As an example, the backlight 3 is implemented in the form of a cold cathode fluorescence lamp (CCFL) which is a kind of a cold cathode ray tube whose brightness is controlled according to the intensity of the AC power. The backlight 3 is arranged at a rear side of the display unit 1 and provides light so that the luminance level, according to the gray scale level of the input video signal, can be applied. Accordingly, the gray scale level of the input video signal and the light provided from the backlight are merged to thus determine the luminance level.

Moreover, the display apparatus measures whether or not the luminance level of the video signal detected through a luminance detector has been uniformly applied on the display unit 1. That is, the luminance detector is installed in the front side of the display unit 1. The luminance levels are measured at various positions of the display unit 1. The luminance uniformity is calculated using the following equation:

$$\text{Luminance uniformity} = 100 \times (\text{Maximum luminance level}$$
$$- \text{minimum luminance level}) / \text{Maximum luminance level}.$$

Then, if the calculated luminance uniformity in a display apparatus is unable to satisfy a predetermined luminance uniformity, which becomes a reference basis, the display apparatus is disused or is classified as a low-class display apparatus.

By way of background, a conventional display apparatus gamma-converts input video signals using one gamma characteristic curve. Therefore, when the conventional display apparatus has a problem that occurred in the manufacture of the display apparatus, even though a video signal having an identical gray scale level is input to the conventional display apparatus, such a conventional display apparatus has a problem of uneven luminance level on the display unit 1.

That is, in a case wherein the brightness of the left and right end portions of the electrodes in the backlight 3 differs from the brightness of the central portion, distant far from the electrodes, there occurs a phenomenon that the luminance level is not uniform and the display apparatus becomes partially dark. Accordingly, the backlight 3 exhibits a difference in a degree of deterioration in different portions thereof, and a uniformity of the luminance level on the display unit 1 becomes worse as the time of using the backlight 3 elapses.

Also in a case that a liquid crystal material is not uniformly distributed throughout a module due to deformity of the module containing the liquid crystal material, there may occur a lack of uniformity of the luminance level.

SUMMARY OF THE INVENTION

To solve the above and other problems of the conventional art, it is an aspect of the present invention to provide a display apparatus and a control method thereof, which enables a luminance level of a video signal to be uniformly applied in a case that the light is not provided uniformly to respective portions of a display unit in the display apparatus. Exemplary embodiments of the present invention overcome the above disadvantages and disadvantages not described above. However, the present invention is not required to overcome the problems described above, and an exemplary embodiment of the present invention may not overcome any of the problems described above.

It is another aspect of the present invention to provide a display apparatus and a control method thereof, which prevents a luminance level of a screen from being uneven and the quality of the display apparatus from being lowered as the time of use elapses, due to respectively different degrees of deterioration in portions of a backlight.

The aspects of the present invention are achieved by providing a display apparatus including a display unit, comprising: a signal input unit to which a video signal and a synchronization signal are input; a storage unit in which a luminance conversion table corresponding to a plurality of display regions divided on the display unit is stored; a signal processor for processing the video signal to display on the display unit; and a controller for controlling the signal processor converts the video signal so that a luminance level of the video signal is applied based on the luminance conversion table.

According to an exemplary embodiment of the present invention, the controller determines a display region on which the video signal is displayed based on the input synchronization signal, confirms the luminance conversion table corresponding to the determined display region from the storage unit, and controls the signal processor so that the luminance level of the video signal is applied based on the confirmed luminance conversion table.

According to an exemplary embodiment of the present invention, the luminance conversion table is set up based on the result from detecting the luminance level, which is applied in correspondence to a gray scale level of the input video signal, by the plurality of display regions, and comparing the detected luminance level with a predetermined reference luminance level.

According to an exemplary embodiment of the present invention, the luminance conversion table is set up based on a result of detecting luminance levels of a plurality of display regions, which are applied in accordance with a gray scale level of the video signal, and comparing the detected luminance levels with a reference luminance level.

According to an exemplary embodiment of the present invention, the reference luminance level is any one of a minimum luminance level and an average luminance level among the detected luminance levels by the display regions.

According to an exemplary embodiment of the present invention, the controller comprises a counter which counts the number of synchronization signals and the number of clock signals in the synchronization signal, and determines the display region in which the video signal is displayed according to a count value of the counter.

According to an exemplary embodiment of the present invention, the counter comprises a horizontal synchronization counter counting the number of the horizontal synchronization signals, and a clock counter counting the number of the clock signals in the horizontal synchronization signal, and the controller confirms an abscissa of a pixel in which the video signal is displayed according to the count value of the clock counter, and an ordinate of the pixel in which the video signal is displayed according to the count value of the horizontal synchronization counter, and determines the display region in which the pixel is included.

The aspects of the present invention are achieved by providing a control method of controlling a display apparatus having a display unit, the control method comprising: inputting a video signal and a synchronization signal; and converting the video signal to have a luminance level of the determined display region based on a prestored luminance conversion table.

According to an exemplary embodiment of the present invention, converting the video signal comprises: determining a display region in which a video signal is displayed, based on an input synchronization signal if a video signal and the synchronization signal are input to the display apparatus; and converting the video signal in order to apply a luminance level of the determined display region based on a prestored luminance conversion table.

According to an exemplary embodiment of the present invention, the control method further comprises setting and storing the luminance conversion table corresponding to a plurality of display regions divided on the display unit.

According to an exemplary embodiment of the present invention, the setting the luminance conversion table comprises: detecting the luminance level applied in correspondence to a gray scale level of the input video signal by a plurality of display regions; comparing the detected luminance level and a predetermined reference luminance level; and setting the luminance conversion table based on the comparison result of comparing the luminance level and the reference luminance level.

According to an exemplary embodiment of the present invention, the reference luminance level is any one of a minimum luminance level and an average luminance level among the detected luminance levels by the display regions.

According to an exemplary embodiment of the present invention, the determining the display region in which the video signal is displayed comprises determining the display region according to a count value obtained by counting the number of the synchronization signals and the number of clock signals in the synchronization signal.

According to an exemplary embodiment of the present invention, the determining the display region in which the video signal is displayed comprises: confirming an ordinate of a pixel in which the video signal is displayed, by the count value obtained by counting the number of horizontal synchronization signals; confirming an abscissa of the pixel in which the video signal is displayed, by the count value obtained by counting the number of clock signals in the horizontal synchronization signal; and determining the display region in which the pixel is included based on the ordinate and abscissa of the confirmed pixel.

BRIEF DESCRIPTION OF THE DRAWINGS

The above and/or other aspects and advantages of the present invention will become apparent and more readily appreciated from the following description of the exemplary embodiments of the present invention, taken in conjunction with the accompanying drawings, in which:

FIG. 1 is a graphical view showing a conventional gamma conversion table;
FIG. 2A is a side view showing structure of a backlight of a conventional liquid crystal display apparatus;
FIG. 2B is a front view showing structure of a backlight of a conventional liquid crystal display apparatus;
FIG. 3 is a control block diagram of a display apparatus according to an exemplary embodiment of the present invention;
FIG. 4 is a view showing a display unit which is divided into sixteen display regions according to an exemplary embodiment of the present invention;
FIG. 5A shows a table showing a luminance level detected according to a gray scale level of a video signal input to a first region according to an exemplary embodiment of the present invention;
FIG. 5B is a view showing a luminance conversion table of a first region according to an exemplary embodiment of the present invention;
FIG. 5C is a view showing a luminance level which is applied by converting the video signal input to the first region according to an exemplary embodiment of the present invention using a luminance conversion table;
FIG. 6 is a flowchart view illustrating a control method of a display apparatus according to an exemplary embodiment of the present invention; and
FIG. 7 is a flowchart view illustrating a procedure of setting a luminance conversion table of a display apparatus according to an exemplary embodiment of the present invention.

DETAILED DESCRIPTION OF EXEMPLARY EMBODIMENTS OF THE INVENTION

Reference will now be made in detail to exemplary embodiments of the present invention, examples of which are illustrated in the accompanying drawings, wherein like reference numerals refer to like elements throughout. The exemplary embodiments are described below in order to explain the present invention by referring to the FIG. 1, FIG. 2A, FIG. 2B, FIG. 3, FIG. 4, FIG. 5A, FIG. 5B, FIG. 5C, FIG. 6 and FIG. 7.

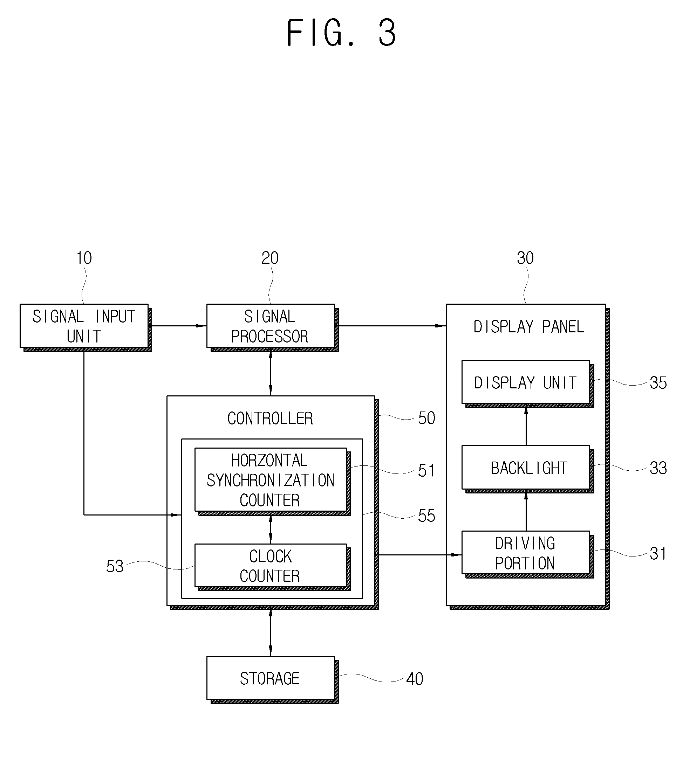

FIG. 3 is a control block diagram of a display apparatus according to an exemplary embodiment of the present invention. As shown in FIG. 3, a display apparatus includes a signal input unit 10, a signal processor 20, a display panel 30, a storage unit 40, and a controller 50.

The signal input unit 10 according to the present exemplary embodiment receives a video signal and a synchronization signal, and may include a tuner (not shown) receiving a broadcast signal and an outer connector (not shown) receiving the video signal from an external device.

Here, it is preferable, but not necessary, that in the outer connector (not shown) includes a connector of various forms so that a video signal of various formats can be input. For example, the signal input unit 10 may include at least one of a D-Sub connector, a Composite Video Baseband Signal (CVBS) connector, S-video connector, and a component connector.

The signal processor 20 processes the video signal input from the signal input unit 10, under the control of the controller 50 (which is described below), and provides the processed video signal so as to be displayed on a display unit 35. Particularly, the signal processor 20 converts a gray scale level of the video signal using a luminance conversion table.

Moreover, the signal processor 20 may include various functions in correspondence with the format of the input video signal. For example, the signal processor 20 may include an analog to digital converting function for converting the input video signal of various analog formats into a digital video signal of a certain format, a digital decoding function, a scaling function for receiving a digital video signal and/or an analog video signal so as to control a vertical frequency, a resolution, an aspect ratio, etc., which correspond to an output specification of the display panel 30, and a predetermined format conversion function.

The display panel 30 displays the processed video signal output from the signal processor 20, and includes the display unit 35, a backlight 33 and a driving unit 31.

The display unit 35 displays the video signal and is divided into a plurality of display regions. The display unit 35 can be implemented in a variety of forms such as a Liquid Crystal Display (LCD) and a Plasma Display Panel (PDP), for example.

The backlight 33 illuminates the display unit 35, and generally includes a lamp as a light source, an optical sheet including a light guide plate, a prism sheet, a polarizer, etc., for converting the light emitted from the lamp into a surface light source and for enhancing light efficiency and luminance.

As an example, the backlight 33 used for the display apparatus according to an exemplary embodiment of the present invention can be implemented by a cold cathode fluorescence lamp (CCFL), which is a kind of a cold cathode ray tube that receives electric power from an AC power supply, and whose brightness is controlled according to the intensity of the AC power. In addition, the backlight 33 is arranged at the rear end of the display unit 35 and provides the light so that images are displayed on the display unit 35.

The driving unit 31 receives electric power from an electric power supply (not shown), which supplies electric power and thus drives the backlight 33. That is, the driving unit 31 converts the DC electric power, which is supplied from the electric power supply (not shown), into AC electric power and then outputs the AC electric power necessary for driving the backlight 33. According to this exemplary embodiment of the present invention, the driving unit 31 controls the size of the driving current supplied to the backlight 33, under the control of the controller 50, to thereby control the backlight 33 to generate light.

The storage unit 40 stores a luminance conversion table corresponding to a plurality of display regions displayed on the display unit 35, and can be implemented by an Electrically Erasable Programmable Read-Only Memory (EEPROM), an Erasable Programmable Read-Only Memory (EPROM), etc. Moreover, the storage unit 40 can be implemented by a frame buffer in which the video signal processed by the signal processor 20 is recorded in units of a frame.

According to an exemplary embodiment of the present invention, the luminance conversion table can be set by the controller 50 (which is described below), and can be stored in a manufacturing process of the display apparatus. Moreover, if the display unit 35 is divided into display regions of M×N, the luminance conversion tables of M×N are stored in the storage unit 40 in correspondence with the display regions. The detailed description of the luminance conversion tables is described below.

If a video signal and a synchronization signal are input to the display apparatus, the controller 50 determines a display region in which the video signal is displayed based on the synchronization signal, and controls the video signal to be converted based on the luminance conversion tables corresponding to the determined display region. The controller 50 can be implemented by a controller including a central processing unit (CPU), a microcomputer (MICOM), etc.

More specifically, the controller 50 includes a counter 55, which counts the number of the synchronization signals and the number of the clock signals in the synchronization signal, and determines the display region in which the video signal is displayed, by using the counter 55. In addition, the counter 55 includes a horizontal synchronization counter 51, which counts the number of the horizontal synchronization signals, and a clock counter 53, which counts the number of the clock signals in the horizontal synchronization signal.

In general, the vertical synchronization signal is synchronized at the beginning time of every frame, and the horizontal synchronization signal is synchronized with the beginning time of every line in a frame. The clock signals are generated from the controller 50 using the horizontal synchronization signal, in order to process the video signal included in every line.

Therefore, if the vertical synchronization signal has been synchronized, a new frame is initiated, and thus the horizontal synchronization counter 51, resets the count value to zero. Then, the horizontal synchronization counter 51 counts the number of the horizontal synchronization signals and confirms an ordinate of the pixel in which the video signal processed in the signal processor 20 will be displayed, that is, a row number of the pixel.

If the horizontal synchronization signal has been synchronized, a new line is initiated, and thus the clock counter 53 resets the count value to zero. Then, the clock counter 53 counts the number of the clock signals in the horizontal synchronization signal and confirms an abscissa of the pixel in which the video signal processed in the signal processor 20 will be displayed, that is, a column number of the pixel in the aforementioned row.

The controller 50 judges where the video signal processed in the signal processor 20 is included among a plurality of display regions in the display unit 35, using the abscissa and the ordinate of the pixel confirmed by the counter 55.

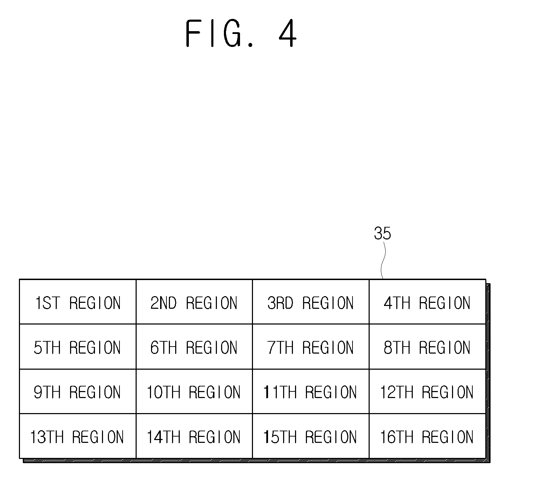

FIG. 4 is a view showing a display unit, which is divided into sixteen display regions according to an exemplary embodiment of the present invention. As shown in FIG. 4, if the display unit 35 is divided into the display regions of 4×4, the display regions are classified into sixteen regions from the first region to the sixteenth region, respectively.

According to an exemplary embodiment of the present invention, if the resolution of the display unit 35 has been set as 1024×768 pixels, one display region includes 256×192 pixels. For example, assuming that the count value counted from the clock counter 53 is 280, and the count value counted from the horizontal synchronization counter 51 is 500, the coordinate of the pixel becomes (280, 500). Therefore, the controller 50 can judge that the video signal which is being processed in the signal processor 20 is included in the tenth region among the sixteen divided display regions.

In this manner, if the display region of the video signal displayed at present is determined, the controller 50 confirms a luminance conversion table corresponding to the determined display region from the storage unit 40, and controls the signal processor 20 so that the luminance level of the video signal is applied based on the corresponding confirmed luminance conversion table, which is stored in the storage unit 40.

For example, the luminance level may be applied as 80cd (cd = candela) if the gray scale level of the input video signal of a first region is a level 1, and the luminance level may be applied as 100cd if the gray scale level is a level 2. Further, if the gray scale level is the level 2 in the luminance conversion table corresponding to the first region, then the luminance level may be applied as 80cd. Here, if the gray scale level of the video signal displayed on the first region is a level 2, then the controller 50 should control the luminance level to be applied as 80cd according to the luminance conversion table. Therefore, the controller 50 controls the signal processor 20 to convert the gray scale level of the currently processed video signal into a level 1.

Moreover, the controller 50 detects the luminance level which is applied in correspondence to the gray scale level of the input video signal by a plurality of display regions, and sets the luminance conversion table based on the result comparing the detected luminance level and a predetermined reference luminance level to then be stored in the storage unit 40.

According to an exemplary embodiment of the present invention, the luminance conversion table is a table or a function regarding luminance levels which are applied according to the gray scale level of the input video signal, and is set in a manufacturing process of the display apparatus to then be stored in the storage unit 40.

The controller 50 controls the display unit 35, which is divided into a plurality of display regions, to make the gray scale level of the video signal by the display regions from the minimum level, for example, zero to the maximum level, for example, 255. The controller 50 also detects the luminance level which is applied accordingly. For example, the luminance level can be detected by a luminance detector (not shown). The controller 50 receives the luminance level detected by the luminance detector and sets the luminance conversion table.

Moreover, the controller 50 controls the driving unit 31 to supply identical drive electric power to the backlight 33 in each of a plurality of display regions at the detection time of the luminance level, so that the brightness of the light generated from the backlight 33 is identical. This is because the luminance level may be changed on every display region of the display apparatus, if the brightness of the light emitted from the backlight 33 is changed, even though the gray scale levels of the video signal and the magnitude of the driving power which the driving unit 31 provides to the backlight 33 remain constant.

Additionally, if the controller 50 is provided with the detected luminance level from the luminance detector, then the controller 50 sets a minimum luminance level or an average luminance level, among the detected luminance levels by display region, as a reference luminance level. And, the controller 50 may set the luminance conversion table based on a result from a comparison of the detected luminance level with a predetermined reference luminance level to then be stored in the storage unit 40.

According to an exemplary embodiment of the present invention, the controller 50 can set any one of the minimum luminance levels having the minimum value among the detected luminance levels, and the average luminance level, which is an average value of the detected display region luminance levels, as the predetermined reference luminance level under the condition that the gray scale levels of the video signals input to the display regions are identical, to thereby set the luminance conversion table.

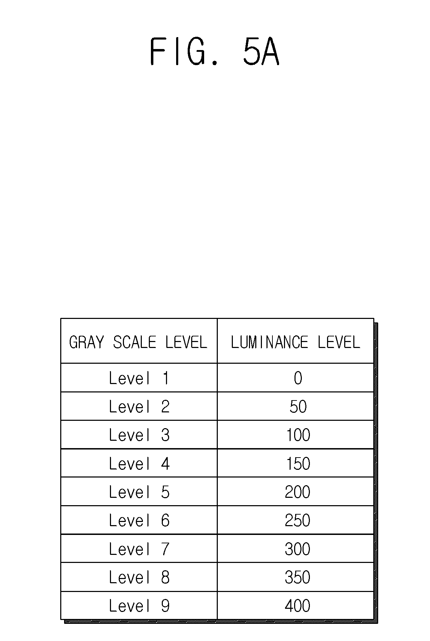

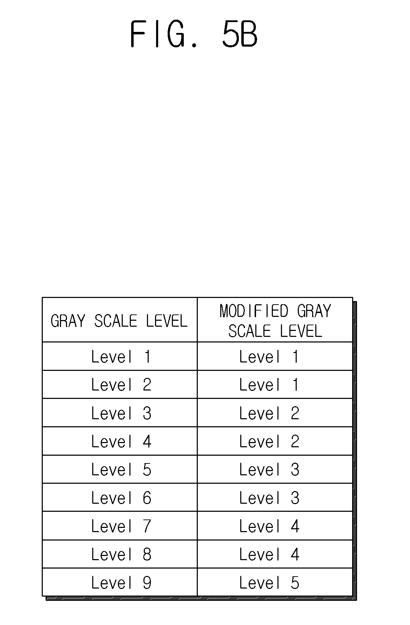

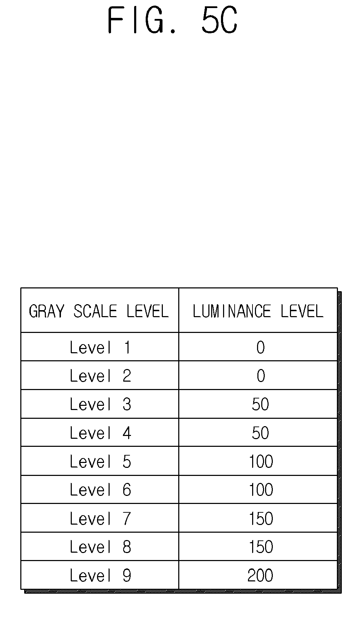

Hereinafter, the luminance conversion table will be described in more detail, with reference to FIGS. 5A, 5B and 5C.

FIG. 5A shows a table depicting a luminance level detected according to a gray scale level of a video signal input to a first region according to an exemplary embodiment of the present invention. FIG. 5B is a view showing a luminance conversion table of a first region according to an exemplary embodiment of the present invention. FIG. 5C is a view showing a luminance level which is applied by converting the video signal input to the first region according to an exemplary embodiment using the luminance conversion table. Hereinafter, the minimum gray scale level of the video signal is a level 0, and the maximum gray scale level is a level 9.

As shown in FIG. 5A, if the gray scale level of the video signal inputted to the first region is a level 1, then the luminance level is 0cd, and if the gray scale level of the video signal is a level 9, then the luminance level is 400cd. Here, assuming that the reference luminance level is 200cd, when the gray scale level of the video signal input to the first region is a level 9, the luminance level should be applied as 200cd according to the luminance conversion table shown in FIG. 5B.

Therefore, the luminance conversion table can be produced as illustrated in FIG. 5B. In FIG. 5B, when the input gray scale level is a level 1, the luminance level is 0cd, and when the input gray scale level is a level 2, the gray scale level is converted into a level 1 so that the luminance level becomes 0cd.

In the case that the input gray scale level is a level 2, as shown in FIG. 5A, the luminance level has been applied as 50cd before the luminance level is converted according to the luminance conversion table. However, if the luminance level is converted according to the luminance conversion table shown in FIG. 5B, then, as shown in FIG. 5C, the luminance level is applied as 0cd.

Moreover, in the case that the input gray scale level is a level 9, the gray scale level of the video signal is converted into a level 5 so that the luminance level should be applied as 200cd, and the maximum luminance level of 400cd detected from the first region is reduced to the reference luminance level of 200cd according to the luminance conversion table.

Accordingly, in the case that the luminance level is differently applied on different display regions due to a mechanical problem of the display apparatus, the display unit 35 is provided with a plural luminance conversion tables corresponding to each display region. Accordingly, if the gray scale levels of the input video signals are identical to each other, the adjusted luminance levels will be uniformly applied for the same gray scale levels of the input video signals.

As such, the screen quality can be improved by improving a luminance on every display region.

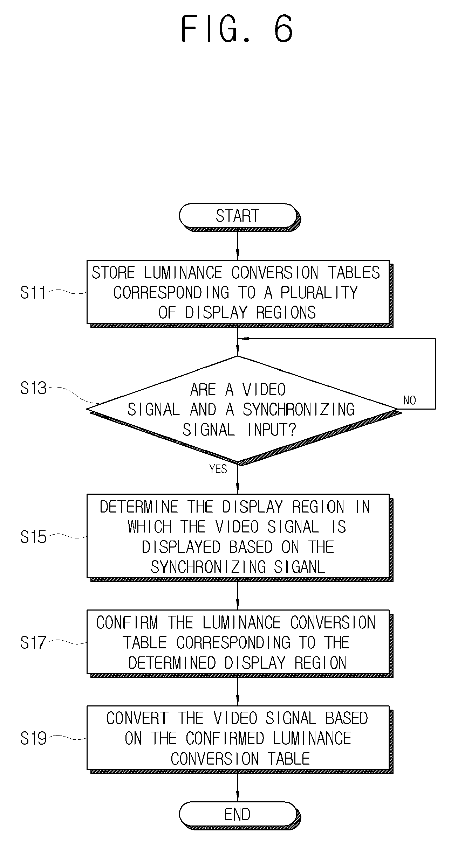

A control method of controlling the display apparatus according to an exemplary embodiment of the present invention will be described below with reference to FIG. 6.

As a display unit 35 is divided into a plurality of display regions, the luminance conversion tables corresponding to the plurality of display regions are set and stored in a display unit 35 (operation S11).

If a video signal and a synchronization signal are input through a signal input unit 10 (operation S13), then a controller 50 determines the display region in which the video signal will be displayed based on the synchronization signal (operation S15). As described above, for example, the controller 50 can determine the display region in which the video signal will be displayed according to the count value which counts the number of the synchronization signals and the number of the clock signals in the synchronization signal using a counter 55.

In addition, the luminance conversion table corresponding to the determined display region is confirmed in a storage unit 40 (operation S17).

Then, the signal processor 20 is controlled to convert the video signal based on the confirmed luminance conversion table (operation S19). As described above, for instance, the signal processor 20 converts the gray scale level of the video signal so that the luminance levels are uniformly applied according to the display regions.

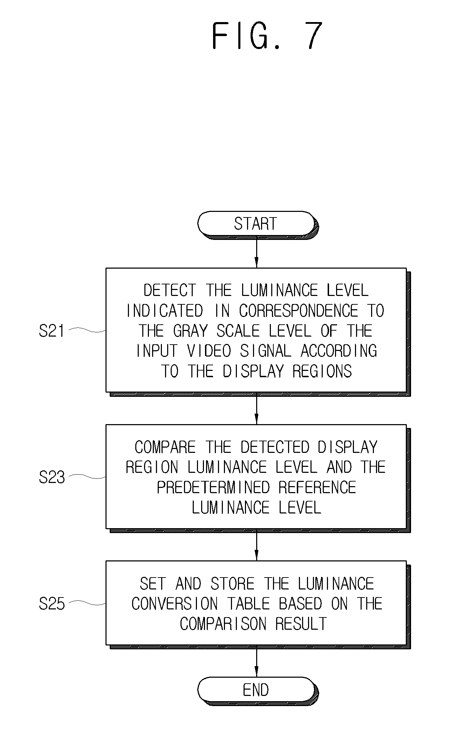

Hereinafter, an exemplary setting method of the above-described luminance conversion table will be illustrated using the flowchart of FIG. 7.

As shown in FIG. 7, the gray scale level of the video signal is converted from the minimum gray scale level to the maximum gray scale level. The indicated luminance level is detected according to the display regions (operation S21). Here, the controller 50 controls the driving unit 31 so that the light intensity radiating from the backlight 33 is uniform. Thus, when the same gray scale level is input for each display region, the indicated luminance level is measured.

Then, the detected display region luminance level and the predetermined reference luminance level are compared (operation S23).

The luminance conversion table is then set based on the comparison result and is stored in the storage 40 unit (operation S25). As described above, for example, the luminance conversion tables are set in a manufacturing process of the display apparatus, and such luminance conversion tables can be put on the market.

Accordingly, the luminance non-uniformity which can occur due to a problem of the display apparatus itself can be supplemented by converting the video signal. Further, since a luminance level is uniformly applied on every display region, the product value can be prevented from falling.

Moreover, exemplary embodiments of the present invention can prevent the luminance non-uniformity caused by the difference in deterioration rates by the display regions as the use time elapses. Additionally, in a case requiring uniformity on the full screen, the error of determination from the error of the apparatus can be prevented.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

**Claims**

1.   A display apparatus comprising:

> a signal input unit to which a video signal and a synchronization signal are input;
> a storage unit in which a luminance conversion table corresponding to a plurality of display regions of a display unit is stored;

a signal processor which processes the video signal for display on the display unit; and
a controller which controls the signal processor to convert the video signal so that a luminance level of the video signal is applied using the luminance conversion table.

2. The display apparatus according to claim 1, wherein the controller:

determines a display region on which the video signal is displayed using the synchronization signal;
confirms that the luminance conversion table corresponds to the determined display region, and
controls the signal processor so that the luminance level of the video signal is applied using the confirmed luminance conversion table.

3. The display apparatus according to claim 2, wherein the luminance conversion table is generated using a result of detecting a luminance level, which is applied in accordance with a gray scale level of the video signal, and comparing the detected luminance level with a reference luminance level.

4. The display apparatus according to claim 2, wherein the luminance conversion table is generated using a result of detecting luminance levels of a plurality of display regions, which are applied in accordance with a gray scale level of the video signal, and comparing the detected luminance levels with a reference luminance level.

5. The display apparatus according to claim 4, wherein the reference luminance level comprises at least one of a minimum luminance level and an average luminance level of the detected luminance levels.

6. The display apparatus according to claims 1, 3 or 5, wherein the controller comprises a counter which counts a number of synchronization signals and a number of clock signals in a synchronization signal, and which determines a display region on which the video signal is displayed using a count value of the counter.

7. The display apparatus according to claim 6, wherein the counter comprises:

a horizontal synchronization counter which counts a number of horizontal synchronization signals; and
a clock counter which counts a number of clock signals in a horizontal synchronization signal,

wherein the controller determines an abscissa of a pixel on which the video signal is displayed using a count value of the clock counter,
wherein the controller determines an ordinate of the pixel on which the video signal is displayed using a count value of the horizontal synchronization counter, and
wherein the controller determines a display region in which the pixel is included.

8. A control method of controlling a display apparatus, the control method comprising:

inputting a video signal;
inputting a synchronization signal; and
converting the video signal to a converted signal indicating a luminance level of a determined display region of a display unit,

wherein the luminance level is determined using a luminance conversion table.

9. The control method according to claim 8, wherein converting the video signal further comprises:

determining the display region of the display unit, using the input synchronization signal; and
converting the video signal by applying the luminance level of the determined display region using the luminance conversion table.

10. The control method according to claim 9, further comprising generating the luminance conversion table; and storing the luminance conversion table;
wherein the luminance conversion table corresponds to a plurality of display regions on the display unit.

11. The control method according to claim 10, wherein the generating the luminance conversion table comprises:

detecting luminance levels, which are applied in correspondence to a gray scale level of the video signal, of a plurality of display regions;

comparing the detected luminance levels and a reference luminance level, thereby generating a comparison result; and

generating the luminance conversion table using the comparison result.

12. The control method according to claim 11, wherein the reference luminance level is at least one of a minimum luminance level and an average luminance level of the detected luminance levels.

13. The control method according to claims 9 to 12, wherein the determining the display region further comprises determining the display region using a count value obtained by counting a number of synchronization signals and a number of clock signals in a synchronization signal.

14. The control method according to claim 13, wherein the determining the display region further comprises:

determining an ordinate of a pixel on which the video signal is displayed using a count value obtained by counting a number of horizontal synchronization signals;

determining an abscissa of the pixel on which the video signal is displayed using a count value obtained by counting a number of clock signals in a horizontal synchronization signal; and

determining the display region as a region in which the pixel is included using the determined ordinate and the determined abscissa.

# FIG. 1

# FIG. 2A

# FIG. 2B

3

# FIG. 3

SIGNAL INPUT UNIT — 10

SIGNAL PROCESSOR — 20

DISPLAY PANEL — 30

CONTROLLER — 50

HORZONTAL SYNCHRONIZATION COUNTER — 51

55

CLOCK COUNTER — 53

DISPLAY UNIT — 35

BACKLIGHT — 33

DRIVING PORTION — 31

STORAGE — 40

# FIG. 4

35

| 1ST REGION | 2ND REGION | 3RD REGION | 4TH REGION |
|------------|------------|------------|------------|
| 5TH REGION | 6TH REGION | 7TH REGION | 8TH REGION |
| 9TH REGION | 10TH REGION | 11TH REGION | 12TH REGION |
| 13TH REGION | 14TH REGION | 15TH REGION | 16TH REGION |

# FIG. 5A

| GRAY SCALE LEVEL | LUMINANCE LEVEL |
|---|---|
| Level 1 | 0 |
| Level 2 | 50 |
| Level 3 | 100 |
| Level 4 | 150 |
| Level 5 | 200 |
| Level 6 | 250 |
| Level 7 | 300 |
| Level 8 | 350 |
| Level 9 | 400 |

# FIG. 5B

| GRAY SCALE LEVEL | MODIFIED GRAY SCALE LEVEL |
|---|---|
| Level 1 | Level 1 |
| Level 2 | Level 1 |
| Level 3 | Level 2 |
| Level 4 | Level 2 |
| Level 5 | Level 3 |
| Level 6 | Level 3 |
| Level 7 | Level 4 |
| Level 8 | Level 4 |
| Level 9 | Level 5 |

# FIG. 5C

| GRAY SCALE LEVEL | LUMINANCE LEVEL |
|------------------|-----------------|
| Level 1 | 0 |
| Level 2 | 0 |
| Level 3 | 50 |
| Level 4 | 50 |
| Level 5 | 100 |
| Level 6 | 100 |
| Level 7 | 150 |
| Level 8 | 150 |
| Level 9 | 200 |

# FIG. 6

```
                    ┌─────────────┐
                    │    START    │
                    └──────┬──────┘
                           │
      ┌────────────────────▼────────────────────┐
      │   STORE LUMINANCE CONVERSION TABLES      │
S11   │   CORRESPONDING TO A PLURALITY           │
      │       OF DISPLAY REGIONS                 │
      └────────────────────┬────────────────────┘
                           │◄──────────────────┐
                           │                   │
                    ╱──────▼──────╲            │
                  ╱                 ╲           │
      S13       ╱     ARE A VIDEO     ╲   NO    │
            ◄──╱  SIGNAL AND A SYNCHRONIZING╲───┘
                ╲    SIGNAL INPUT?   ╱
                  ╲                 ╱
                    ╲──────┬──────╱
                      YES  │
      ┌────────────────────▼────────────────────┐
      │   DETERMINE THE DISPLAY REGION IN        │
S15   │   WHICH THE VIDEO SIGNAL IS              │
      │   DISPLAYED BASED ON THE                 │
      │   SYNCHRONIZING SIGANL                   │
      └────────────────────┬────────────────────┘
                           │
      ┌────────────────────▼────────────────────┐
      │   CONFIRM THE LUMINANCE CONVERSION       │
S17   │   TABLE CORRESPONDING TO THE             │
      │   DETERMINED DISPLAY REGION              │
      └────────────────────┬────────────────────┘
                           │
      ┌────────────────────▼────────────────────┐
      │   CONVERT THE VIDEO SIGNAL BASED         │
S19   │   ON THE CONFIRMED LUMINANCE             │
      │   CONVERSION TABLE                       │
      └────────────────────┬────────────────────┘
                           │
                    ┌──────▼──────┐
                    │     END     │
                    └─────────────┘
```

# FIG. 7

```
                    ┌─────────────┐
                    │    START    │
                    └──────┬──────┘
                           │
                           ▼
       ┌──────────────────────────────────────┐
       │     DETECT THE LUMINANCE LEVEL        │
       │   INDICATED IN CORRESPONDENCE TO      │
  S21  │     THE GRAY SCALE LEVEL OF THE       │
       │   INPUT VIDEO SIGNAL ACCORDING        │
       │        TO THE DISPLAY REGIONS         │
       └──────────────────┬───────────────────┘
                          │
                          ▼
       ┌──────────────────────────────────────┐
       │    COMPARE THE DETECTED DISPLAY       │
  S23  │  REGION LUMINANCE LEVEL AND THE       │
       │     PREDETERMINED REFERENCE           │
       │         LUMINANCE LEVEL               │
       └──────────────────┬───────────────────┘
                          │
                          ▼
       ┌──────────────────────────────────────┐
       │    SET AND STORE THE LUMINANCE        │
  S25  │   CONVERSION TABLE BASED ON THE       │
       │        COMPARISON RESULT              │
       └──────────────────┬───────────────────┘
                          │
                          ▼
                   ┌─────────────┐
                   │     END     │
                   └─────────────┘
```